# EUROPEAN PATENT APPLICATION

(11) **EP 1 566 940 A1**
(43) Date of publication of application: **24.08.2005**
(21) Application number: 04290471.4
(22) Date of filing: 20.02.2004
(51) Int. Cl.: H04L 29/06

(54) **A method, a service system, and a computer software product of self-organizing distributing services in a computing network**

(71) Applicant: ALCATEL, 75008 Paris (FR)
(72) Inventor: Szabo, Peter, Dr., 75180 Pforzheim (DE); Rössler, Horst, 70794 Filderstadt (DE); Hoche, Michael Walter, Dr., 71701 Schwieberdingen (DE)
(74) Representative: Rausch, Gabriele

(57) **Abstract**

The present invention relates to computer networks and deals more particularly with a method, a service system, and a computer program product of self-organizing distributing services in a computing network (such as web services or other network accessible services) to/from various sites within a network, where the method of self-organizing distributing services in a computing network comprising the steps of receiving requests for a selected service from a client, identifying a first approximate server for the selected service, serving the received requests from the first approximate server, effecting a dynamic deployment of the service to one or more other servers when a dynamic deployment is indicated, and serving the received requests from the one or more other servers, and metering performance of the web service and deriving a local environmental area performance map, deriving a performance topology for identifying approximate server locations, and indicating the dynamic deployment based on a cluster analysis of the performance topology.

## Description

The present invention relates to computer networks and deals more particularly with a method, a service system, and a computer program product of self-organizing distributing services in a computing network (such as web services or other network accessible services) to/from various sites within a network.

Web services are an emerging mechanism for distributed application integration. A web service is an interface that describes a collection of network-accessible operations. Even a web server providing hyper text pages might be regarded as a web service. A web service might also fulfill a specific task.

When it comes to handling a high-volume service requests the actual quality of service of a web server typically depends on two parameters: network-transfer capabilities and server-capabilities. Network-transfer capabilities are mainly a matter of Internet-link bandwidth or jitter, etc., while server capability might be e.g. response time depending upon resources like fast processors, lots of memory, and good input/output performance etc.

Practical approaches for distributing e.g. hypertext transfer protocol traffic improve performance by increasing the number of web servers. This involves an attempt to distribute the traffic onto a cluster of back-end web servers. The goal then is to balance the traffic which is currently done either by extending domain name system by an round robin assignment or by introducing a (reverse) proxy.

With web services, distributed network access to software will become a widely available and a widely used operation. This, however, places a heavy demand on the computing resources. Several techniques have been developed for alleviating the processing burden on back-end servers, including caching of static content; workload balancing; and content distribution.

Caching attempts to avoid repeated generation of content by storing content and serving it to subsequent requesters whenever possible. Serving cached content not only reduces the workload on the back-end computing resources, but it also improves response time to the user. Workload balancing improves the performance of a Web site by dynamically adjusting the amount of work sent to each server in a clustered group of servers. Content distribution attempts to pro-actively (statically) publish static content to various locations in the network; for example, to cache servers in order to increase the likelihood that requests can be served from cache. Content distribution service providers providing access to their broad network infrastructure for caching of static content in close proximity to the end user. This content distribution process will typically result in reduced response time. Usage of edge servers in a network configuration provides increased network efficiency and availability by caching static application components. An edge server is a server which is physically located at or near the edge of a network.

The International patent application WO 02/095605 generalizes these vector processing like solutions and rather static configurations by a dynamic service deployment mechanism.

Such a generalized service deployment mechanism is the next generation of edge server technology that bring dynamic aspects of application programs to the edge of the network. This will be accomplished via hosting web applications at the network edge and statically deploying presentation logic such as servlets, Java Server Pages, Personal Home Page, etc. at those edge servers.

The web services will facilitate application integration via open web-based standards, such as Hypertext Transfer Protocol, Simple Object Access Protocol and/or Extensible Markup Language Protocol, Web Services Description Language, and Universal Description, Discovery, and Integration. Using such components, web services will provide requesters with transparent access to program components which may reside in one or more remote locations, even though those components might run on different operating systems and be written in different programming languages than those of the requester.

The generalized service deployment mechanism encounters the service demand by providing a technique for dynamically deploying network-accessible services in a distributed network in contrast to a static deployment.

This dynamic deployment is organized by means of an cloning mechanism and a deployment entity controlling the dynamic distribution and organizing the client server association.

Replication or migration of a complete service together with a central client server association is not smooth but inharmonious, i.e. there are inherent latencies in migration phases. That leads to a coarse deployment. The service site arrangement should approximate the clients requests with respect to certain qualities like response time.

Accordingly, what is needed is a technique for avoiding these drawbacks and limitations of the prior art which are self-organizing high available and performant web services.

This problem is solved by a method of self-organizing distributing services in a computing network, comprising the steps of
- receiving requests for a selected service from a client,
- identifying a first approximate server for the selected service,
- serving the received requests from the first approximate server,
- effecting a dynamic deployment of the service to one or more other servers when a dynamic deployment is indicated, and
- serving the received requests from the one or more other servers,
- metering performance of the web service and deriving a local environmental area performance map,
- deriving a performance topology for identifying approximate server locations, and
- indicating the dynamic deployment based on a cluster analysis of the performance topology.

The problem is solved inter alia by a service system for self-organized distributing services in a computing network, the service system comprising receiving means for receiving requests for a selected service from a client, processing means for identifying a first approximate server for the selected service and for serving the received requests from the first approximate server, means for effecting a dynamic deployment of the service to one or more other servers when a dynamic deployment is indicated, and means for serving the received requests from the one or more other servers, where the system comprising further metering means for metering performance of the web service and processing means for deriving a local environmental area performance map, processing means for deriving a performance topology for identifying approximate server locations, and processing means for indicating the dynamic deployment based on a cluster analysis of the performance topology.

And the problem is solved by a computer program product for self-organized distributing services in a computing network according to the above mentioned method.

In other words the invention provides self-organizing web services. Due to the self-organizing principle and the awareness of the performance topology or at least of a partial awareness derived from a local environmental area an automatic network (performance) management is enabled. A highly dynamically deployment, transfer, partial deployment partial transfer, and client server association results in a fault tolerance system ensuring high quality of a web service.

Service instances are distributed, maintained, and synchronized such that quality of service requirements are met. And an optimization method for network resource allocation that allows to decide on clone or re-locate services and service parts is presented. Service quality is monitored continuously. When the service quality in focus degrades and there is a payoff the server is cloned or re-located (local) environment dependent. It is suggested to compute a performance topology out of the measurements, e.g. by topological sheafication of neighboring, i.e. by gluing neighboring information together. When it is indicated to clone a service onto another server the requests are parted according to the locations of the clients originating the requests. Corresponding sub-networks are identified, preferably using established network partitions like domain name server responsibilities in order to establish an advantageous client server assignment. The services might also be transferred (located) to the neighborhood and the request resolution mechanism is informed. The network itself will optimizes as a living self-organizing system like an organism.

An advantage of such an optimized network resource allocation is among the increased efficiency and performance of the network that the method enhances the fault-tolerance of the system. The mechanism allows to optimize with respect to any effective observable service quality. The technique also allows to monitor real performance and performance requirements, thus enhancing network transparence. The computational techniques for the main geometric problems are very efficient.

These and many other advantages of the present invention will become apparent to those of ordinary skill in the art from a consideration of the drawings and ensuing description, where
**Figure. 1** is a schematic drawing of a prior art showing a classical client server binding.
**Figure. 2** is a schematic drawing of a prior art proxy client server binding.
**Figure. 3** is a schematic drawing of the topology of a prior art client server binding array.
**Figure. 4** is a schematic drawing of the topology of a prior art client server binding where the servers are distributed.
**Figure. 5** is a schematic drawing of a dynamic deployment method yielding to the prior art client server binding of figure 4.
**Figure. 6** is a schematic drawing of self-organizing distributed services resulting from the application of the method of according to the invention.
**Figure. 7** is a schematic drawing of the method of self-organizing distributing services according to the invention.
**Figure. 8** is a schematic drawing of an updating method of self-organizing distributed services according to the invention.

The invention establishes a dynamic relation between network resources and requests with respect to (any kind of) observable service quality. Such quality might be reactivity, reply time, availability, performance, functionality, security, etc. This relation is treated as a clustering.

When a service quality in focus degrades for a client, a server clone or at least a partial clone or a transferred service part in the near of the client is established. The requests are partitioned or assigned according to the location of the server sites. Therefor a site is identified and e.g. a clone is at least partially moved there in order to reduce the distance which reflects the service quality. Correspondingly the name server instances (and routers) are informed.

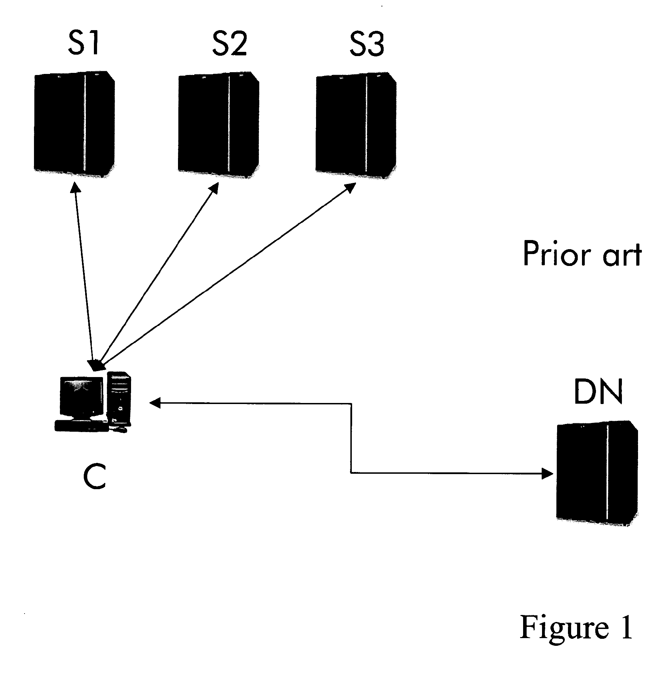

In contrast, the prior art scenario in figure 1 shows a client C that is connected to a name server NS instance and to three server instances S1, S2, and S3.

The server instance S1, S2, and S3 provide each a service. The client is enabled to invoke a certain service by asking the name server NS for this certain service. This might for instance be a domain name server or the like. The answer allows the client to contact a server providing the certain service. One service might be provided by several servers, S1, S2, and S3, say. This enables a load balancing at the name server NS. Technically most domain name servers support at least a blind round robin, i.e. the load is balanced randomized.

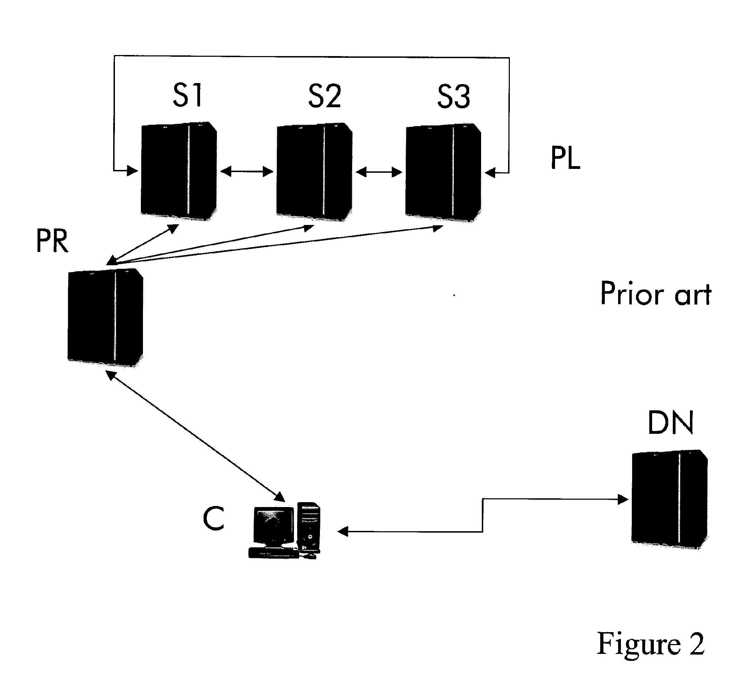

Figure 2 shows a configuration that supports further balancing. The figure shows the client C and the name server NS, as well as the three servers S1, S2, and S3. Between the servers S1, S2, and S3 and the client C is a proxy server PR. The proxy server PR enables a caching. Further the proxy server PR allows a real load balancing between the servers S1, S2, and S3, i.e. it could meter the performance and effect the balancing e.g. by establishing a connection to a certain server or by updating the name server information. This techniques are realized in current so called reverse proxies. A further mechanism for balancing load is that the servers itself are enabled to delegate requests between each other. These techniques were implemented e.g. for the apache web server, see especially the description for mod_backhand at http://www.backhand.org/.

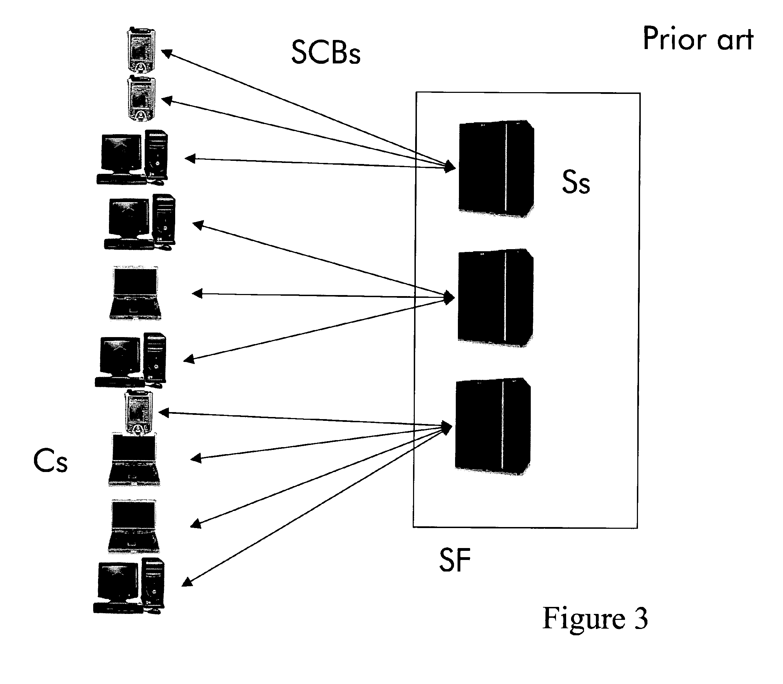

Figure 3 shows the topology that is generated on the network by applying the mentioned load balancing approaches. A location independent plain matching between servers Ss and clients Cs is established where usually the servers Ss are concentrated on a server farm SF or in a high-performance backbone network. The performance of the network communication which constitutes to a large portion of the overall service performance is not targeted by these approaches.

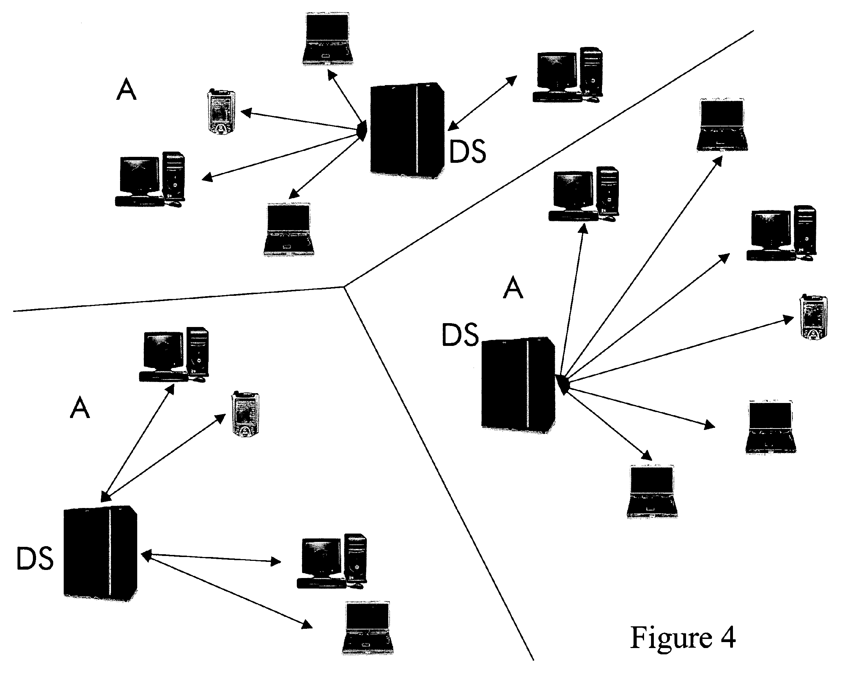

The deployment of services in a network is shown in figure 4. The figure shows a system of distributed servers DS where each client C is associated to a distributed server DS. This association establishes a decomposition of the network in sections or areas A. The distribution of the servers allows to implicate or at least consider the association of clients to servers as well as the relative location of the servers with respect to the clients. Thus constituting the performance of the network communication to a load balancing.

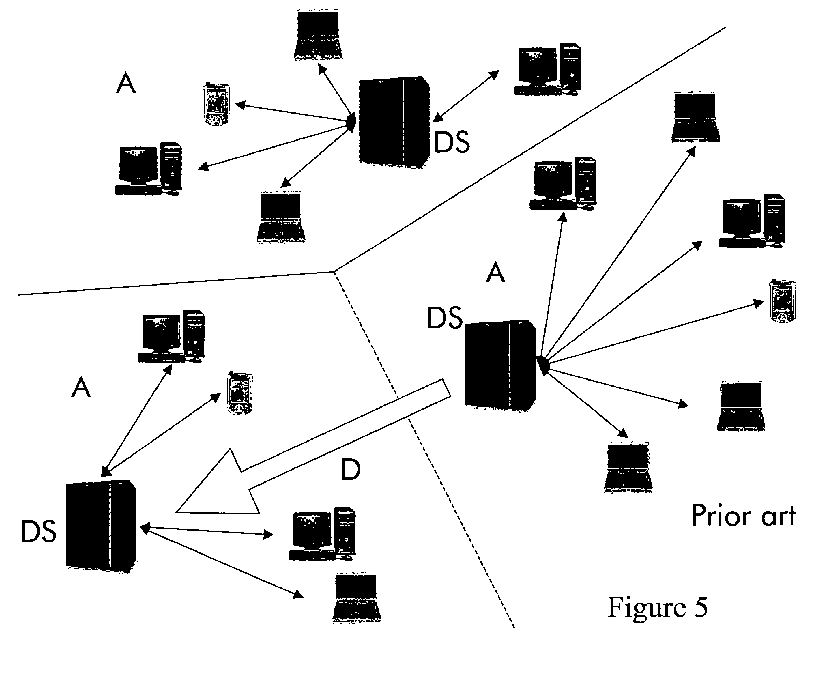

A dynamic deployment of services in a network is shown in figure 5. A deployment D is a means for distributing the distributed server DS. A deployment D of a service to a distributed server establishes a new area A. The deployment D allows to implicate or at least consider the association of clients to servers as well as the relative location of the servers with respect to the clients.

Even with the very large bandwidths or in general the high performance of the current networks, it is preferable to maximize its use and to ensure service availability and performance as well. This is important for instance when the capacity is much smaller and over provisioning is not an option. Thus a (communication or network) quality of service is related to a service performance and it is preferable to optimize or at least consider the quality of service when providing a service. There are approaches like performance guarantees on e.g. delay, delay variation, etc. based on a kind of service level agreements. It is also possible to provide guarantee that individual applications will work end-to-end. It is also known to provide some dispatching to determine granted and available quality of service.

When considering a network as a set of consumers, i.e. any kind of requests like a service invocation, e.g. a web-browser client etc. and a set of producers, i.e. any kind of resources like a service or a web-server the association between clients and services induces a topology with respect to a service performance. Such a performance might be reaction (reply) time, jitter, availability, actuality etc. Suppose for illustration purposes the performance is reply time. The performance is reflected in figure 4 by the Euclidean distance , e.g. by the length of the arrows and the distance between a client and a server. Note that a real performance (aspect) might not induce a metric space but allows at least a comparison between two client server associations.

A clustering of the clients (in this space) is advantageous in order to minimize the number of servers and to maximize the performance of the service. A space is considered as virtually extension, including so many things that they can never be grasped all at once. Second, space connotes the idea of free movement, of being able to visit a variety of states or places. Third, a space has some kind of a geometry (topology), implying concepts such as distance, direction, or dimension. The geometry of the performance space reflects the effective network and resource performance, i.e. the service performance.

A complex set of performance aspects might induce a complex high-dimensional metric space. The (distance-)relation, i.e. a consumer is near to a producer, is than defined in terms of the metric space. Replication and/or movement of a producer is a consequence of distance change with the goal of a distance reduction. In addition distance reduction might propagate through the network influencing other producers.

For solving this kind of geometrical matching problems, i.e. client server association, server positioning (deployment) efficient algorithms are known and it is suggested to apply and reuse e.g. computational geometry for network resource management. Such computational geometry problems are for instance :
- PROBLEM 1 (CLOSEST PAIR). Given N points in the plane, find two whose mutual distance is smallest. The central algorithmic issue is whether it is necessary to examine every pair of points to find the minimum distance thus determined. This can be done in O(dN²) time in d dimensions, for any d. In one dimension a faster algorithm is possible, based on the fact that any pair of closest points must be consecutive in sorted order. One may thus sort the given N real numbers in O(NlogN) steps and perform a linear-time scan of the sorted sequence.
- PROBLEM 2 (ALL NEAREST NEIGHBORS). Given N points in the plane, find a nearest neighbor of each. Note that it is not necessarily symmetric. Further note also that a point is not the nearest neighbor of a unique point. The solution is a collection of ordered pairs.

These two problem solutions are suited to identify approximation servers.
- PROBLEM 3 (EUCLIDEAN MINIMUM SPANNING TREE). Given N points in the plane, construct a tree of minimum total length whose vertices are the given points. By a solution to this problem we will mean a list of the N -1 pairs of points comprising the edges of the tree. The Euclidean minimum spanning tree problem is a common component in applications involving networks. If one desires to set up a communications system among N nodes requiring interconnecting cables, using an Euclidean minimum spanning tree algorithm will result in a network of minimum cost.

This problem solution is suited to establish a minimal inter-link between the service sites e.g. for propagating service updates.
- PROBLEM P.4 (TRIANGULATION). Given N points in the plane, join them by nonintersecting straight line segments so that every region internal to the convex hull is a triangle. Being a planar graph, a triangulation on N vertices has at most 3N - 6 edges. A solution to the problem must give at least a list of these edges. The preceding four problems P. 1 through P.4 are "one-shot" applications which concern the construction of some geometric object (closest pair, all nearest neighbors, Euclidean minimum spanning tree, and triangulation).
- PROBLEM P.5 (NEAREST-NEIGHBOR SEARCH). Given N points in the plane, identify a nearest neighbor of a new given query point q be found 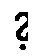 A Divide-and-Conquer Approach: The lower bound challenges us to find a O(N/ogN) algorithm for CLOSEST PAIR. There seem to be two reasonable ways to attempt to achieve such behavior: a direct recourse to sorting or the application of the divide-and-conquer scheme. The Locus Approach to Proximity Problems: The Voronoi Diagram While the previous divide-and-conquer approach for the closest-pair problems is quite encouraging, it even fails to solve the ALL NEAREST NEIGHBOR problem, which would seem to be a simple extension. Indeed, if we try to set up the analogous recursion for ALL NEAREST NEIGHBORS, we find that natural way of splitting the problem does not induce sparsity, and there is no apparent way of accomplishing the merge step in less than quadratic time. On the other hand, a valuable heuristic for designing geometric algorithms is to look at the defining loci and try to organize them into a data structure.

These structures are suited to identify new approximation servers.
- PROBLEM P.8 (LOCI OF PROXIMITY). Given a set S of N points in the plane, for each point p in S what is the locus of points in the plane that are closer to p, than to any other point of S 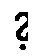 Given two points Pi and Pj, the set of points closer to Pi than to Pj is just as the half-plane containing Pi that is defined by the perpendicular bisector of the half-plane containing P1. The locus of points closer to P1 than to any other point, which we denote by V(i), is the intersection of N-1 half-planes, and is a convex polygonal region having no more than N-1 sides. V(i) is called the Voronoi polygon associated with Pi. These N regions partition the plane into a convex net which we shall refer to as the Voronoi diagram, denoted as Vor(S). The vertices of the diagram are Voronoi vertices, and its line segments are Voronoi edges. Each of the original N points belongs to a unique Voronoi polygon. The Voronoi diagram contains, in a powerful sense, all of the proximity information defined by the given set.
- The Voronoi diagram, while very powerful, has no means of dealing with farthest points, k closest points and other distance relationships. As such, it is unable to deal with some of the problems we have posed. The difficulty is that we have been working with the Voronoi polygon associated with a single point, but such a restriction is not necessary and it will be useful to speak of the generalized Voronoi polygon V(T) of a subset T of. That is, V(T) is the locus of points p such that each point of T is nearer top than is any point not in T. A generalized Voronoi polygon is still convex. It may, of course, happen that V(T) is empty. In "The Voronoi diagram of a finite set S of points in the plane is a partition of the plane so that each region of the partition is the locus of points which are closer to one member of S than to any other member." In this definition we have italicized three items (set of points, plane, one member), which are exactly the ones that are susceptible of generalization. Indeed, generalizations have been attempted and obtained with varying degrees of success, in each of these three directions. First of all, while still remaining in the plane (i.e., in two dimensions), the given set may be extended to contain other geometric objects besides points, such as segments, circles and the like. Next, to seek a data structure that efficiently supports k-nearest-neighbor searches, one may wish to define loci of points closer to a given subset of k members of S than to any other subset of the same size. It is interesting that, if one lets k become N - 1, one obtains the farthest point Voronoi diagram.

The concrete presentation in case when the performance distance establishes indeed an Euclidean space could be used to establish at least heuristics for a less structured space. The geometric interpretation of the problem provides an advice for deriving clustering and approximation algorithms.

From the virtual performance space consequences to the real deployment have to be derived. The simplest is the try out and measuring e.g. suggested by M. Karlsson and M. Mahalingam in their paper "Do We Need Replica Placement Algorithms in Content Delivery Networks". There the authors suggest to model the topology with a (full) distance matrix a placement matrix and a routing matrix.

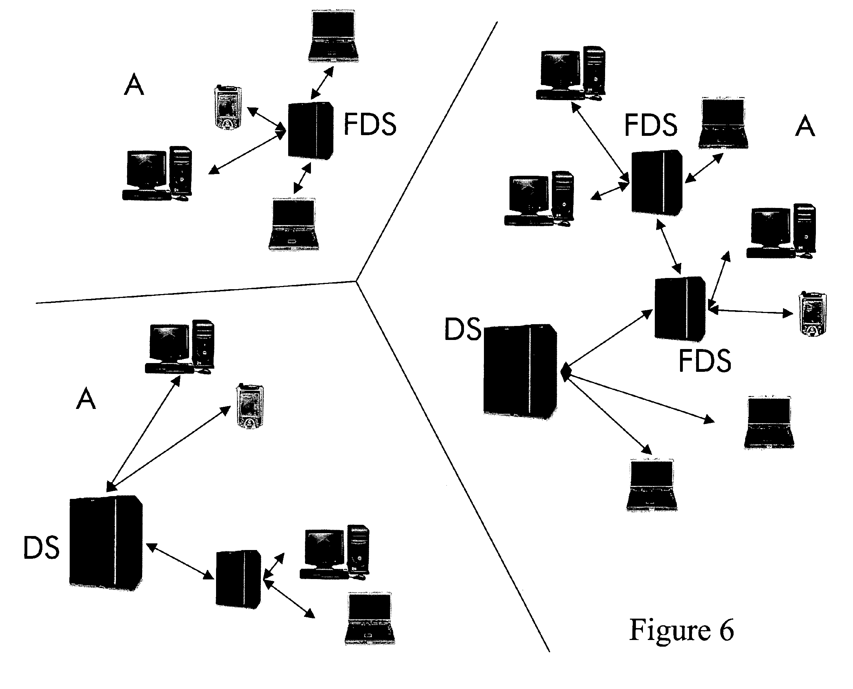

A further aspect of service deployment is targeted in the figure 6. The figure shows two of the mentioned distributed servers DS provisioning a service to (associated) clients. Beside that the figure shows further distributed servers FSD proxying partial services. Such a partial service might be a cashed content or a whole cached server method, i.e. a partial service deployment. A complete area might even be only servers by such a further distributed server FDS providing a partial service, only. The decomposition of a service into parts of services might go hand-in-hand with the object description of a service. An inter service interface between two service parts might be realized as well by a service interface or any other technology, e.g. Java remote message invocation.

Another replica placement algorithm for web server replicas than the brute force greedy placement algorithm above is described in the paper "On the Placement of Web Server Replica" of L. Qui et al. where a reduction onto the K-median problem is used. Approximation algorithms following operations research approaches are e.g. mentioned in the paper "An improved approximation algorithm for the metric ancapacitated facility location problem" of M. Sviridenko et al.

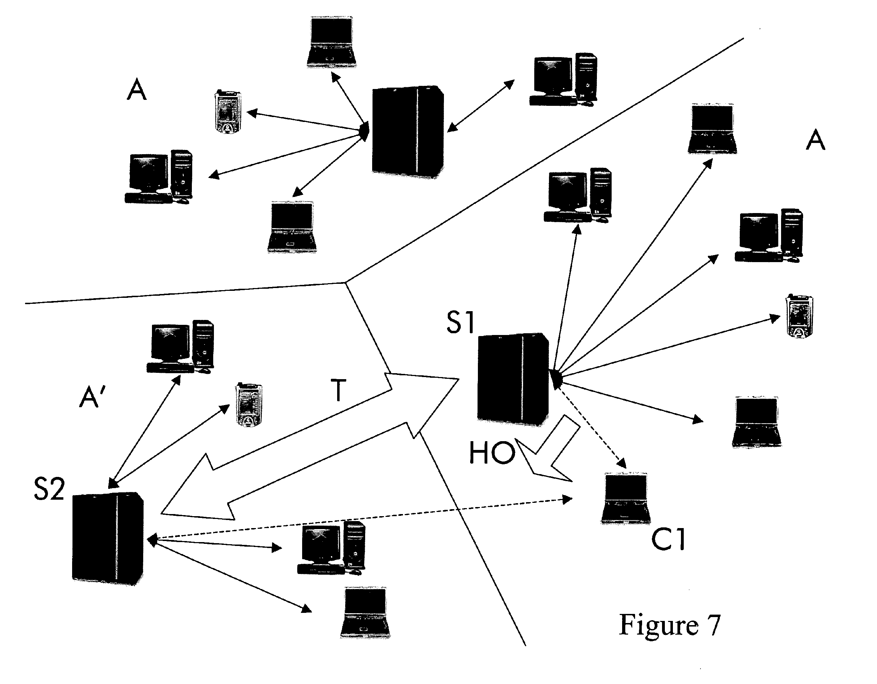

It is a self-organizing wide area network for service deployment and partial service deployment suggested where as shown in figure 7 a plurality of dynamic aspects are implemented. The figure shows the situation of figure 6 where between a first server S1 and a second server S2 a partial service is transferred T. The figure also shows a hand over HO of a client C1, i.e. the change of the association between the client C1 and the first server S1 to the second server S2. Thus the Area A' received another member an a partial service capability.

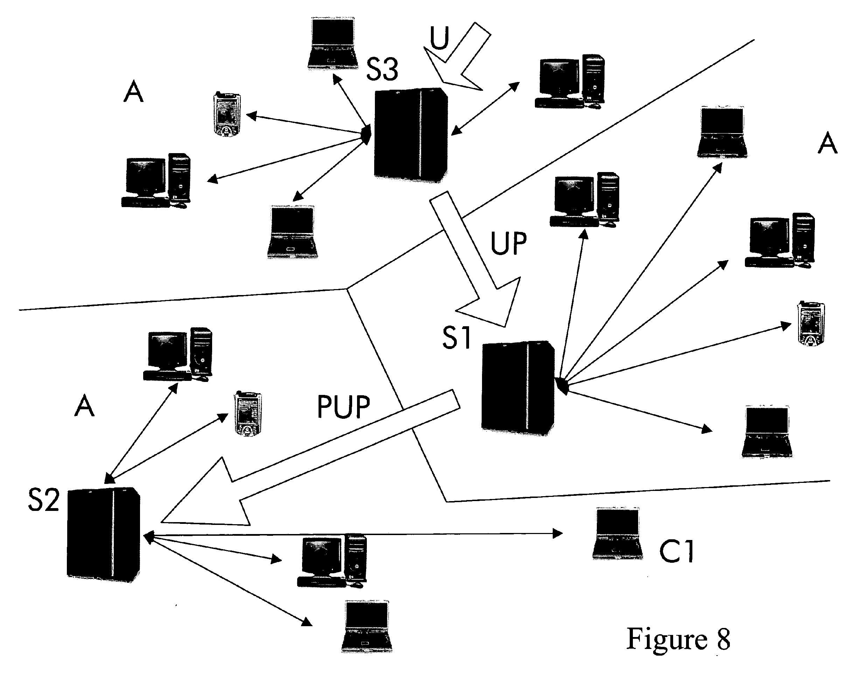

Figure 8 reflects the service maintenance problem where an service update U is performed at a third server S3 an then propagated UP to the first server S1, where the first server propagating a partial update PUP only, to the second server S2 because as above described, this server only hosts a part of the service.

A (partial) distribution link and an indication of the distributed part allows to maintain service integrity and update consistency.

This approach yields to a self-organized morphing network (graph) of services service that is hosted and partitioned with respect to metered service performance. The service might clone itself (partially), a clone might die, i.e. disappear (at least partially) or the client server association might change dynamically, i.e. on-the-fly. The possible service part decomposition could be based on the (object) structure of the service or might be even randomly, resulting in self-organizing mobile resources.

## Claims

1. A method of self-organizing distributing services in a computing network, comprising the steps of
- receiving requests for a selected service from a client (C),
- identifying a first approximate server (S1, S2, S3, DS, FDS) for the selected service,
- serving the received requests from the first approximate server,
- effecting a dynamic deployment (D) of the service to one or more other servers (S1, S2, S3, DS, FDS) when a dynamic deployment is indicated, and
- serving the received requests from the one or more other servers,
**characterized in that** the method further comprises the steps of
- metering performance of the web service and deriving a local environmental area performance map (A),
- deriving a performance topology for identifying approximate server locations, and
- indicating the dynamic deployment based on a cluster analysis of the performance topology.

2. The method according to claim 1, **characterized in that** the step of effecting a dynamic deployment of the service comprises the steps of
- decomposing the service into at least two service parts (DS, FDS),
- effecting a dynamic deployment (D) of a service part of the at least two service parts, and
- establishing an interface between the at least two service parts.

3. The method according to claim 1, **characterized in that** the method further comprises the step of
- effecting a dynamic transfer (T) of the service to an approximate server when a dynamic transfer is indicated.

4. The method according to claim 3, **characterized in that** the step of effecting a dynamic transfer of the service comprises the steps of
- decomposing the service into at least two service parts
- effecting a dynamic deployment of a service part of the least two service parts
- establishing an interface between the at least two service parts
- effecting a dynamic un-deployment of the service part.

5. The method according to claim 1, **characterized in that** the method further comprises the step of
- indicating the dynamic un-deployment based on a cluster analysis of the performance topology and
- effecting a dynamic un-deployment of the service when a dynamic un-deployment is indicated.

6. The method according to claim 1, **characterized in that** the method further comprises the step of
- indicating a change of the association between the client and the first approximate server to a second approximate server based on a cluster analysis of the performance topology and
- effecting dynamically a change of the association (HO) between the client and the first approximate server to a second approximate server.

7. A service system (Figure 6) for self-organized distributing services in a computing network, the service system comprising receiving means for receiving requests for a selected service from a client, processing means for identifying a first approximate server (S1, S2, S3, DS, FDS) for the selected service and for serving the received requests from the first approximate server, means for effecting a dynamic deployment (D) of the service to one or more other servers when a dynamic deployment is indicated, and means for serving the received requests from the one or more other servers (S1, S2, S3, DS, FDS), **characterized in that** the system comprising further metering means for metering performance of the web service and processing means for deriving a local environmental area performance map (A), processing means for deriving a performance topology for identifying approximate server locations, and processing means for indicating the dynamic deployment based on a cluster analysis of the performance topology.

8. A computer program product for self-organized distributing services in a computing network comprising means adapted to perform the method according to claim 1.

## Amended claims

### Amended claims in accordance with Rule 86(2) EPC.

**1.** A method of self-organizing distributing services in a computing network, comprising the steps of
- receiving requests for a selected service from a client (C),
- identifying a first approximate server (S1, S2, S3, DS, FDS) for the selected service,
- serving the received requests from the first approximate server,
- effecting a dynamic deployment (D) of the service to one or more other servers (S1, S2, S3, DS, FDS) when a dynamic deployment is indicated, and
- serving the received requests from the one or more other servers,
**characterized in that** the method further comprises the steps of
- metering performance of the service and deriving a local environmental area performance map (A),
- deriving a performance topology by topological sheafication of neighboring, i.e. by gluing neighboring information together, for identifying approximate server locations, and
- indicating the dynamic deployment based on a cluster analysis of the performance topology.

**2.** The method according to claim 1, **characterized in that** the step of effecting a dynamic deployment of the service comprises the steps of
- decomposing the service into at least two service parts (DS, FDS),
- effecting a dynamic deployment (D) of a service part of the at least two service parts, and
- establishing an interface between the at least two service parts.

**3.** The method according to claim 1, **characterized in that** the method further comprises the step of
- effecting a dynamic transfer (T) of the service to an approximate server when a dynamic transfer is indicated.

**4.** The method according to claim 3, **characterized in that** the step of effecting a dynamic transfer of the service comprises the steps of
- decomposing the service into at least two service parts
- effecting a dynamic deployment of a service part of the least two service pa rts
- establishing an interface between the at least two service parts
- effecting a dynamic un-deployment of the service part.

**5.** The method according to claim 1, **characterized in that** the method further comprises the step of
- indicating the dynamic un-deployment based on a cluster analysis of the performance topology and
- effecting a dynamic un-deployment of the service when a dynamic un-deployment is indicated.

**6.** The method according to claim 1, **characterized in that** the method further comprises the step of
- indicating a change of the association between the client and the first approximate server to a second approximate server based on a cluster analysis of the performance topology and
- effecting dynamically a change of the association (HO) between the client and the first approximate server to a second approximate server.

**7.** A service system (Figure 6) for self-organized distributing services in a computing network, the service system comprising receiving means for receiving requests for a selected service from a client, processing means for identifying a first approximate server (S1, S2, S3, DS, FDS) for the selected service and for serving the received requests from the first approximate server, means for effecting a dynamic deployment (D) of the service to one or more other servers when a dynamic deployment is indicated, and means for serving the received requests from the one or more other servers (S1, S2, S3, DS, FDS), **characterized in that** the system comprising further metering means for metering performance of the service and processing means for deriving a local environmental area performance map (A), processing means for deriving a performance topology, by topological sheafication of neighboring, i.e. by gluing neighboring information together, for identifying approximate server locations, and processing means for indicating the dynamic deployment based on a cluster analysis of the performance topology.

**8.** A computer program product for self-organized distributing services in a computing network comprising means adapted to perform the method according to claim 1.
